(19) Europäisches Patentamt
European Patent Office
Office européen des brevets

(11) Publication number: **0 197 608**
**A1**

(12) **EUROPEAN PATENT APPLICATION**

(21) Application number: 86200562.6

(22) Date of filing: 03.04.86

(51) Int. Cl.[4]: **G 11 B 5/70**

(30) Priority: 11.04.85 NL 8501063

(43) Date of publication of application: 15.10.86 Bulletin 86/42

(84) Designated Contracting States: BE DE FR GB NL

(71) Applicant: PD Magnetics B.V.
Molenstraat 37
NL-4902 NM Oosterhout(NL)

(72) Inventor: Huisman, Hendrikus Frederikus
INT. OCTROOIBUREAU B.V. Prof. Holstlaan 6
NL-5656 AA Eindhoven(NL)

(72) Inventor: Pigmans, Henricus Johannes Maria
INT. OCTROOIBUREAU B.V. Prof. Holstlaan 6
NL-5656 AA Eindhoven(NL)

(74) Representative: Weening, Cornelis et al,
INTERNATIONAAL OCTROOIBUREAU B.V. Prof. Holstlaan 6
NL-5656 AA Eindhoven(NL)

(54) **Magnetic recording element.**

(57) A magnetic recording element in which the magnetic coating layer comprises a dispersing agent which is the salt of dimethyl cyclohexyl amine and a phosphoric ester.

EP 0 197 608 A1

"Magnetic recording element."

The invention relates to a magnetic recording element which comprises a carrier having a recording medium provided thereon.

The carrier is usually manufactured from a synthetic resin, for example, polyester or polyvinyl chloride, but it may also consist of paper, glass or metal. The carrier may be in the form of a tape, plate, disk, and the like.

The magnetic recording medium comprises a binder in which magnetic particles (magnetic pigment) are finely distributed by using a dispersing agent.

In order to obtain a good recording density and hence a faithful reproduction or recording of signals, it is of great importance for the magnetic particles to be optimally dispersed in the binder.

In published Netherlands Patent Application No. 7614182 a magnetic recording element is described in which a salt of an amine with a mono- and/or diester of phosphoric acid is used as a dispersing agent.

From the table on page 10 of the above-mentioned Patent Application it appears that the best results are obtained with the salt of triethanol amine and the phosphoric ester of ethoxylated oleyl alcohol which comprises 10 ethylene oxide groups.

Especially in the past few years, higher and higher requirements are imposed upon the quality of recording elements. This applies to audio tapes and to the so-called video tapes on which video and audio information is recorded and read. A characteristic aspect of the recording element which is important in this respect is the so-called electromagnetic behaviour which is determined in standard tests and compared with a DIN-standard reference tape. In audio tapes, the tests comprise a determination of the Maximum Output Level at 333 Hz and 3% distorsion, the saturation at 8 kHz, the relative tape sensitivity at 333 Hz and 10 kHz, as well as the bias noise. In video tapes, tests are used with which the signal strength (output) of short-wave signals (1.45 $\mu$m and 1.25 $\mu$m) is determined as well as the signal-to-noise

ratio (S/N ratio). The result of each test is expressed in dB difference vis-à-vis the same rest carried out with the reference tape. The sum of all the dB differences is a measure of the electromagnetic quality of the recording element.

It is the object of the invention to provide a recording element having a very high electromagnetic quality. A more particular object is to provide an electromagnetic quality which is considerably better than that of the best recording element described in the above-mentioned Netherlands Patent Application.

According to the invention, this object is achieved by means of a recording element of the type mentioned in the opening paragraph which is characterized in that the dispersing agent satisfies the formula

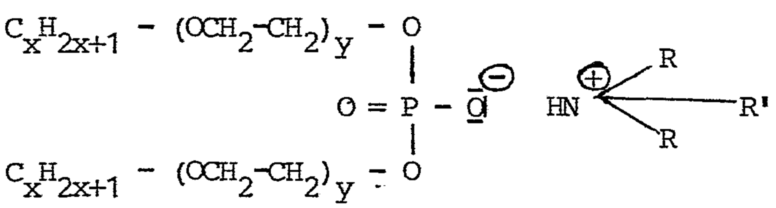 (1)

in which R is a methyl group or an ethyl group,

R' is an ethyl group or a cyclohexyl group,

in which, when R' is an ethyl group,

R is a methyl group,

$x= 8-12$

$y= 2-8$.

In a favourable embodiment of the invention a dispersing agent satisfying formula 1 is used in which the average value of $\underline{x} = 9-10$ and the average value of $\underline{y} = 5-6$. In a further favourable embodiment a compound of formule 1 is used wherein R is a methyl group and R' is a cyclohexyl group.

The quantity of dispersing agent used is not restricted to narrow limits. A suitable quantity is from 0.5 - 6% by weight calculated on the quantity of pigment.

The binders to be used in the recording element according to the invention are of the conventional type. Examples of suitable binders are polyvinyl chloride, polyvinyl acetate, polyacrylates, polyester amides, polyurethanes and copolymers of at least two monomers selected from the group consisting of vinyl butyral and vinylidene chloride. Readily useful binders are in particular polyurethanes and

partially hydrolized copolymers of vinyl chloride and vinyl acetate.

The magnetic particles present in the binder are also of the conventional type. For example, Fe-powder, $FE_2O_3$-particles and $CrO_2$-particles may be used as magnetic particles.

The particles are generally acicular having a length of 0.1 - 1 $\mu$m and a thickness of 0.01 - 0.2 $\mu$m.

In addition to the magnetic particles and the dispersing agent, other auxiliary substances may be dissolved or dispersed in the binder, for example, a lubricant. Useful lubricants are, for example, oleic acid, mineral oils, fatty acid amides or mixtures thereof.

The preparation of the recording medium may be carried out in the conventional manner, for example, by thoroughly mixing the magnetic particles, the dispersing agent and a part of the binder by means of a ball mill in a solvent for the binder. The remainder of the binder dissolved in a suitable solvent and the lubricant are then added and the whole is further ground in the ball mill for a few hours. As solvents for the binder may be used organic liquids, for example esters, for example ethyl acetate, ethers, for example, tetrahydrofuran, ketones, for example methyl isobutyl ketone and chlorinated hydrocarbons, for example, 1,2-dichloroethane.

After the dispersion has been thoroughly ground in the ball mill, the larger magnetisable particles possibly still present are sieved out and the mixture is provided on the carrier in a uniform layer. As already noted hereinbefore, the carrier may be in the form of a tape, plate, disk, and the like and, dependent on the material from which the carrier is manufactured, may optionally be provided with a suitable adhesive layer for the recording medium to be provided on the carrier. In addition to the adhesive layer, other layers, for example, an antistatic layer, may be provided. The whole is then dried, the solvent evaporating, and a recording layer having a thickness of 2 to 10 $\mu$m remaining on the carrier.

If desired, this layer of recording medium may be cured to promote the resistance to detrition and be moreover subjected to a calendering process in which the surface of the layer becomes smoother.

The invention will be illustrated with reference to the ensuing specific examples.

Examples:

1. Manufacture of an audio tape.

A magnetic recording medium was prepared by introducing the following ingredients in a pearl mill comprising 600 glass pearls having a diameter of 1-2 mm:

100 parts by weight of $\gamma$-$Fe_2O_3$-particles

3 parts by weight of dispersing agent consisting of a compound of formula 1 in which R is a methyl group, R' is a cyclohexyl group, and the average value of $\underline{x}$ = 9-10 and $\underline{y}$ = 5-6

30 parts by weight of partially hydrolused copolymer of vinyl chloride and vinyl acetate (marketed by Union Carbide under the trade name VAGH)

2.5 parts by weight of acetonitrile rubber (marketed by Union Carbide under the tradename HYCAR)

7.5 parts by weight of phthalic acid ester (softener)

250 parts by weight of a mixture (1:1) of methyl isobutyl ketone and toluene.

The introduced mixture of ingredients is completely mixed for 2 to 3 hours at a high speed of rotation of the pearl mill. The resulting recording medium is then passed through a filter having a pore width 3 µm and provided on a polyester foil having a thickness of 12 µm. After drying and calendering, a magnetic tape is obtained in which the carrier (polyester foil) is provided with a recording medium in a layer thickness of approximately 5microns.

In the same manner, a magnetic tape is manufactured which differs from the above-described tape in that the salt of triethanol amine and the phosphoric ester of ethoxylated oleyl alcohol with 10 ethylene oxide groups was used as a dispersing agent. The last- mentioned dispersing agent is known from the published Netherlands Patent Application No. 7614182.

The usual electromagnetic standard measurements were carried out with each of the manufactured tapes. The measurements comprise a determination of the Maximum Output Level at 333 Hz and 3% distorsion; saturation 8 kHz, relative tape sensitivity at 333 Hz and 10 kHz; bias noise. The result of each measurement is compared with that of a DIN-standard reference tape, in which the difference is expressed in dB's. The sum of the dB-differences of all the tests gives the so-called ER value (electromagnetic response). This ER value represents a complete picture of the electromagnetic properties of the tape. A higher ER-value means a higher (better) level of electromagnetic properties.

The above-described magnetic recording element (magnetic tape) according to the invention has an ER value of 8.5. The above-mentioned known magnetic tape had an ER value of 5.9. From this it appears that the magnetic recording element according to the invention shows a significantly better electromagnetic quality.

2. Manufacture of a video tape.

A magnetic coating layer was manufactured by mixing the following constituents in a pearl mill having 600 glass pearls:

100 parts by weight of chromium dioxide

3.5 parts by weight of dispersing agent consisting of a compount of formula 1 in which R is a methyl group, R' is a cyclohexyl group, and x is on an average 9-10 and y is on an average 5-6

17 parts by weight of polyurethane resin

1 part by weight of butyl stearate (lubricant)

0.3 parts by weight of zinc stearate (lubricant)

0.05 parts by weight of stearamide (lubricant)

3 parts by weight of isocyanate hardener

80 parts by weight of tetrahydrofuran

60 parts by weight of methyl isobutyl ketone

100 parts by weight of cyclohexanone.

The mixture is mixed for a few hours, then filtered and provided on a polyester foil in a layer having a thickness of 15 /um. After drying and calendering the layer thickness of the coating layer (magnetic recording medium) of the resulting video tape was 2.5 /um.

In a corresponding manner a comparative video tape was manufactured, described in published European Patent Application 0.132.040, p. 10, which differed from the above video tape in that 2 parts by weight of bis (2-hydroxyethyl) octadecylamine and 1.5 parts by weight of stearic acid were used as a dispersing agent.

The tapes were tested, in which the signal strenght at 1.45 /um, 1.25 /um and the signal-to-noise ratio were determined. The following values were obtained:

at $\lambda$ = 1.45 /um: 3.5 (1.5) dB; at $\lambda$ = 1.25 /um: 2.0 (0.1) dB and for the signal-to-noise ratio 3.0 (1.0) dB. The numbers in brackets relate to the comparative tape.

# CLAIMS

1. A magnetic recording element having a carrier and a magnetic recording medium provided thereon which comprises a binder, magnetic particles dispersed in the binder and a dispersing agent, characterized in that the dispersing agent satisfies the formula

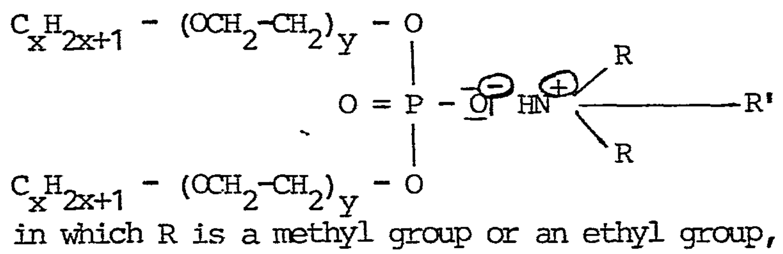 (1)

in which R is a methyl group or an ethyl group,

R' is an ethyl group or a cyclohexyl group,

in which, when R' is an ethyl group,

R is a methyl group,

x = 8–12

y = 2–8.

2. A magnetic recording element as claimed in Claim 1, characterized in that the average value of x in the formula (1) is 9–10, and the average value of y in the formula (1) is 5–6.

3. A magnetic recording element as claimed in Claim 1 or 2, characterized in that a dispersing agent of the formula (1) is used in which R is a methyl group and R' is a cyclohexyl group.

European Patent Office

# EUROPEAN SEARCH REPORT

0197608 Application number

EP 86 20 0562

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 116 721 (FARBENFABRIKEN BAYER A.G.) * Claim 1; page 2, line 40 - page 3, line 5 * | 1-3 | G 11 B 5/70 |
| A | US-A-3 692 884 (E. GASKELL) * Claim 1; column 1, line 30 - column 3, line 6 * | 1 | |
| A,D | FR-A-2 374 945 (N.V. PHILIPS GLOEILAMPENFABRIEKEN) * Claim 1 * | | |
| A | US-A-4 507 217 (B. SEARS) * Claim 1; column 3, line 37 - column 4, line 64 * | 1 | |
| | | | TECHNICAL FIELDS SEARCHED (Int. Cl.4) |
| | | | G 11 B |

The present search report has been drawn up for all claims

| Place of search | Date of completion of the search | Examiner |
|---|---|---|
| THE HAGUE | 23-06-1986 | VITZTHUM N.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document